# FASCICULE DE BREVET EUROPEEN

(11) **EP 1 055 312 B1**
(45) Date de publication et mention de la délivrance du brevet: **01.02.2006**
(21) Numéro de dépôt: 99903734.4
(22) Date de dépôt: 11.02.1999
(51) Int. Cl.: H04L 12/66

(54) **PROCEDE DE TRANSMISSION DE DONNEES ENTRE DEUX RESEAUX EN MODE PAQUET**
VERFAHREN ZUR DATENVERMITTLUNG ZWISCHEN ZWEI PAKETNETZEN
METHOD FOR TRANSMITTING DATA BETWEEN TWO NETWORKS IN PACKET MODE

(30) Priorité: 13.02.1998 FR 9801787; 30.04.1998 FR 9805516
(43) Date de publication de la demande: 29.11.2000
(73) Titulaire: Sagem SA, 75116 Paris (FR)
(72) Inventeur: ALOS, Rafaël, F-95520 Osny (FR)
(74) Mandataire: Bloch, Gérard
(86) Numéro de dépôt international: PCT/FR1999/000306
(87) Numéro de publication internationale: WO 1999/041885

(56) Documents cités:
- EP-A- 0 729 282
- EP-A- 0 777 394

## Description

Les applications mettant en oeuvre des transmissions de données à partir de terminaux de type radiotéléphonie cellulaire tels que ceux du réseau GSM se développent fortement. Parmi celles-ci, celles qui consistent à accéder à un réseau informatique du type de l'INTERNET, ou à des réseaux privés INTRANET, avec des protocoles de type IP comme ceux employés pour les accès à l'INTERNET, sont particulièrement porteuses d'avenir. Ces applications permettent d'offrir aux utilisateurs de nombreux services tels que : messagerie, consultation interactive de services d'information privés ou public, transferts de fichiers ou d'images, téléaction ou télégestion, et autres.

Un mode d'accès à l'INTERNET depuis de tels terminaux consiste à établir, avec un point d'accès ISP à l'INTERNET (ISP : fournisseur de services d'accès : "Internet Service Provider"), une connexion de type "transfert de données en mode circuit" qui réserve, dans un réseau d'accès, comme le réseau téléphonique commuté, RTC, une voie ou ressource de communication pendant toute la durée de la connexion. Les protocoles classiques d'accès à l'INTERNET sont ensuite mis en oeuvre, par exemple : SLIP ou PPP, IP, TCP ou UDP ou autre. Ils offrent en particulier les mécanismes d'adressage nécessaires à l'acheminement des paquets d'informations entre le terminal et son correspondant sur l'INTERNET. Ce mode d'accès en mode circuit a pour avantage d'offrir un temps de transfert de durée minimale et garantie sur le réseau d'accès, puisque la voie de communication est entièrement réservée au terminal. Il est bien adapté aux services exigeant le maximum de la bande passante disponible sur le réseau d'accès, comme le transfert de fichiers volumineux ou d'images, et/ou exigeant le minimum de temps de réponse aller-retour sur le réseau d'accès, comme les applications interactives à interrogations successives multiples. L'inconvénient majeur de ce mode circuit réside dans le fait que les applications ayant de faibles exigences sur les temps de réponse et celles où les interrogations sont peu fréquentes mobilisent les mêmes moyens de fourniture de bande passante, alors que ceux-ci vont rester inutilisés un fort pourcentage du temps.

Un autre mode d'accès à l'INTERNET depuis de tels terminaux consiste à utiliser les services de messages courts, (Short Messages Services), ou éventuellement les USSD (Service Supplémentaire de Données non structurées : Unstructured Supplementary Service Data), offrant un temps de transfert plus réduit que les SMS. Ce mode présente l'avantage d'utiliser le réseau d'accès en mode paquet, ou datagramme, qui est plus cohérent avec les mécanismes de transport du réseau INTERNET. La ressource de communication dans le réseau d'accès est utilisée de manière plus optimisée, car elle est momentanément libérée pour d'autres terminaux lorsqu'il n'y a pas d'information à transmettre. Elle est donc préférable pour les applications ayant de faibles exigences sur les temps de réponse et pour celles où les interrogations sont peu fréquentes.

Comme, dans le mode paquet, une même voie est utilisée en temps partagé par diverses communications, chaque paquet comporte, en plus des données utiles à transmettre, l'adresse de son émetteur et l'adresse du destinataire et éventuellement d'autres données de service comme par exemple un numéro d'ordre.

Les données de service étant de volume fixe, on y associe un volume de données utiles suffisamment grand pour que le paquet total soit essentiellement composé de données utiles, sinon l'intérêt du mode paquet serait perdu.

Or, les paquets de Services de Messages Courts SMS ne permettent que la transmission de paquets de faible taille et ne permettent donc pas la transmission rapide d'un volume important de données, provenant par exemple d'un serveur de l'INTERNET.

De ce fait, l'accès en mode paquet à l'INTERNET paraissait a priori exclu. Plus précisément, si l'on transportait chaque paquet INTERNET, de données utiles et de signalisation, dans le champ limité réservé aux données utiles d'un paquet SMS, la signalisation INTERNET ne laisserait que trop peu de place dans ce champ aux données utiles INTERNET. L'alternative consistant à transporter le paquet INTERNET dans le champ de signalisation du paquet SMS est exclue, car ce dernier est de taille trop exiguë.

EP-A-0 777 394 enseigne un procédé de transmission de messages électroniques d'un réseau de type INTERNET vers un terminal mobile d'un réseau de type GSM en utilisant entre les deux réseaux une passerelle de routage qui décompose un message électronique en une séquence de blocs qui sont encapsulés un par un dans des messages courts SMS du réseau GSM. Une table de traduction d'adresses extrait du message chaque adresse de destinataire du réseau INTERNET et fournit à la place une adresse de destinataire du réseau GSM.

La présente invention vise à proposer un bon compromis entre les contraintes exposées ci-dessus.

A cet effet, l'invention concerne un procédé de transmission de données entre un premier équipement de transmission de données relié à un premier réseau de transmission par paquets, du type téléphonie cellulaire, et un second équipement de transmission relié à un second réseau de transmission de données par paquets, du type de l'INTERNET, chaque paquet de l'un et l'autre des réseaux comportant un champ de données utiles et un champ de signalisation, procédé caractérisé par le fait que, les deux réseaux étant reliés par une passerelle d'adaptation des données et de commande de routage dans les deux réseaux, on transporte, à travers le premier réseau, les deux champs de paquet du second réseau respectivement dans les deux champs de paquet homologues du premier réseau.

Comme premier réseau, on peut par exemple citer les réseaux de type GSM 900, 1800 ou 1900, CDMA One (IS 95), TDMA IS 136/IS 54, CDPD, PDC, GSM-GPRS, UMTS, WCDMA, CDMA, CDMA 2000 et WAP, de téléphonie cellulaire, ou tout autre réseau de transmission par paquets, qu'il soit ou non téléphonique et/ou cellulaire.

La solution proposée consiste donc en une fusion fonctionnelle des deux réseaux pour une exploitation unifiée, qui présente l'avantage, par rapport à l'encapsulation globale exposée plus haut, d'utiliser le champ de signalisation du premier réseau pour les signalisations des deux réseaux, laissant ainsi pleinement disponible le champ de données.

La solution consiste donc, dans le cas du réseau GSM, à permettre que chaque message SMS envoyé par un terminal comporte, dans le champ de signalisation GSM, les signalisations indiquant l'adresse IP vers laquelle, sur INTERNET, sera routé le paquet contenant les informations contenues dans ce message SMS.

L'invention sera mieux comprise à l'aide de la description suivante d'un mode préféré de mise en oeuvre du procédé de l'invention, en référence au dessin annexé, sur lequel :
- la figure 1 illustre un raccordement de réseaux selon l'art antérieur,
- la figure 2 illustre un raccordement de réseaux selon l'invention, et
- la figure 3 représente des paquets GSM de transport de paquets INTERNET.

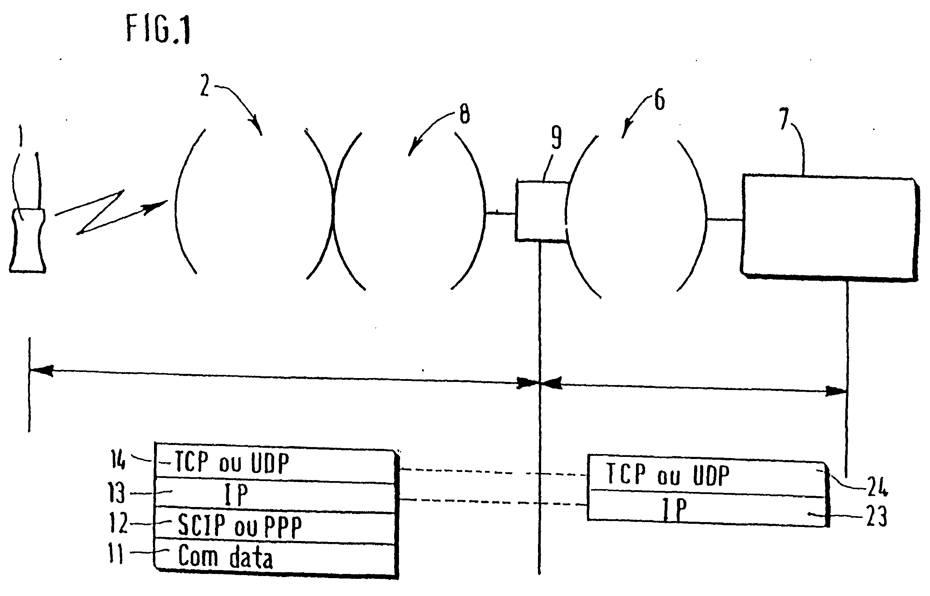

Sur la figure 1, illustrant l'art antérieur, l'équipement 1, ici un terminal, est relié au réseau 2 de transmission de données par paquets, ici le réseau GSM, qui lui-même est relié à un fournisseur de service d'accès 9 (ISP) à travers le réseau téléphonique commuté RTC 8, relié à l'INTERNET 6 auquel est relié un équipement 7, ici serveur de données d'information.

En dessous du schéma des réseaux sont représentées quatre couches logiques 11 à 14 pour la transmission de données dans le GSM : couche 11 : mode circuit (niveau 1 de l'OSI (Interconnexion des Systèmes Ouverts), couche 12 : SLIP ou PPP (niveau 2), couche 13 : routage IP (adresse INTERNET) (niveau 3), couche 14 : TCP ou UDP ou autres (niveau 4) de protocole de transport. Les couches 13 et 14 deviennent les couches 23 et 24 à leur passage dans l'INTERNET 6.

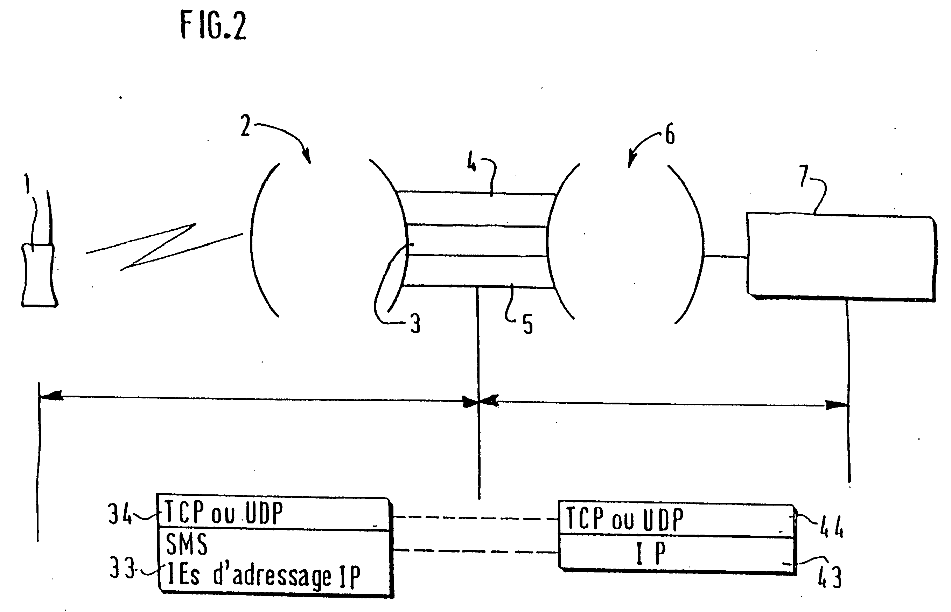

La figure 2, illustrant l'invention, diffère de la figure 1 par le fait que le RTC 8, d'accès en mode circuit à l'INTERNET 6 (fonctionnant en mode paquet), a disparu et que le fournisseur d'accès (ISP) à INTERNET est remplacé par la passerelle 3, 4, 5 comportant des circuits 4 d'adaptation des données transmises, tel que le format, et des circuits de routage 3 et 5 pour respectivement les transmissions dans le réseau GSM 2 et l'INTERNET 6. Les circuits 4 sont en fait un Centre de Service de Messages Courts, SMS-C.

L'adresse IP du serveur 7, appelé par le terminal 1, est ici dans la couche 33 dans un message paquet, qui, dans cet exemple, est du type message court SMS, adapté au réseau GSM mais qui, d'une façon générale, est tout type de paquet.

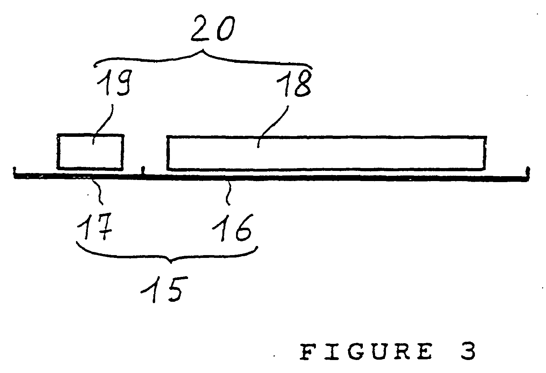

La couche 33, homologue de la couche 13, correspond à une couche de signalisation (niveau OSI 3) et il n'y a plus, en figure 2, l'équivalent des couches inférieures 11 et 12 : toute la signalisation est transmise dans un canal de signalisation 17 de paquet et non dans la bande utile 16 (fig. 3). La couche 34 correspond à la couche 14.

Les couches 43 et 44 dans l'INTERNET 6 correspondent respectivement aux couches 33 et 34.

Outre l'adresse permettant le routage dans le réseau "cible" 6, on peut transmettre aussi de la même façon des éléments de connexion point à point PPP (12).

On conçoit que, les deux réseaux 2 et 6 ayant la même propriété de transmission de paquets, l'INTERNET 6 de l'exemple peut de même émettre vers le réseau GSM 2.

Les informations de couches supérieures (TCP, UDP, ou autre) sont contenues dans la partie "données d'usager" 16 transportées par les SMS.

Les nouveaux éléments d'information (IEs) contiennent toutes les données nécessaires au formatage par le SMS-C 4 et le routeur 5 des paquets IP INTERNET. Ils comportent, en particulier, l'adresse de destination du paquet IP 20 et l'adresse d'origine du paquet.

La signalisation INTERNET peut être conservée en tout ou partie telle quelle, avec une adaptation de forme éventuelle, en étendant le protocole de signalisation SMS ou USSD par de nouveaux mots de code IE (Elément d'Information) représentant les signalisations INTERNET. Il s'agit donc d'un surensemble du protocole GSM classique, permettant par exemple de véhiculer des données d'adresse INTERNET via les circuits 4 et les circuits de routage 3 et 5. On ajoute donc, à la signalisation des paquets du réseau GSM 2, des mots de code représentant des signalisations du réseau INTERNET 6.

Le protocole classique SMS est donc étendu en conséquence en fonction de la signalisation INTERNET, pour prendre en compte en particulier l'adressage IP.

La passerelle 3, 4, 5, et en particulier les circuits 3 et 4, est de même prévue pour traiter le protocole SMS ainsi étendu et en particulier traiter les signalisations SLIP (Protocole INTERNET de Ligne Série) et/ou PPP (Protocole Point-à-Point). La passerelle 3, 4, 5 assure aussi le formatage des paquets dans les deux sens, pour extraire et reconstituer, en un seul paquet 20, les champs 18 et 19 provenant du réseau GMS 2, et l'émettre sur l'INTERNET 6 par le routeur 5. L'opération inverse, de séparation des champs 18, 19, intervient pour les paquets 20 provenant de l'INTERNET 6. Le terminal 1 effectue les opérations inverses de celles de la passerelle 3, 4, 5 et, ainsi, le réseau GSM 2 est transparent aux paquets INTERNET 20.

Ces adresses de destination et d'origine et tout ou partie de la signalisation peuvent, inversement, éventuellement être représentées pour leur transport par des IEs déjà définis par le protocole GSM mais qui sont inutiles, sans objet, dans les applications d'accès à l'INTERNET (par exemple les numéros de téléphone de l'émetteur et du récepteur du SMS). De toutes façons, les IEs inutiles aux applications INTERNET ne sont pas utilisés ici. On évite ainsi toute surcharge du champ de signalisation GSM 17.

La figure 3 illustre la façon de transporter chaque paquet INTERNET à travers le réseau GSM 2.

Un paquet 15 au format GSM comporte le champ 16 de données utiles, pouvant atteindre 140 octets, et le champ 17, plus limité, de données de signalisation IE ou Eléments d'Information IE. Le paquet 20 au format INTERNET comporte de même un champ 18 de données utiles et un champ 19 de données de signalisation. Ici, la taille du champ 18 est limitée à celle du champ homologue 16. De même, les données de signalisation du champ 19 peuvent être logées dans le champ 17.

Pour le transport du paquet 20 INTERNET à travers le réseau GSM 2, les deux champs 18 et 19 du paquet 20 sont logés dans respectivement les deux champs homologues 16 et 17 du paquet 15 au format GSM.

Ainsi, le champ GSM 16 reste réservé aux données utiles et leur offre donc une bande passante non dégradée.

## Revendications

1. Procédé de transmission de données entre un premier équipement de transmission de données (1) relié à un premier réseau (2) de transmission par paquets, du type téléphonie cellulaire, et un second équipement de transmission (7) relié à un second réseau (6) de transmission de données par paquets, du type de l'INTERNET, chaque paquet de l'un et l'autre des réseaux (2, 6) comportant un champ de données utiles (16, 18) et un champ de signalisation (17, 19), procédé **caractérisé par le fait que**, les deux réseaux (2, 6) étant reliés par une passerelle (3, 4, 5) d'adaptation des données et de commande de routage dans les deux réseaux (2, 6), on transporte, à travers le premier réseau (2), les deux champs de paquet (18, 19) du second réseau (6) respectivement dans les deux champs de paquet homologues (16, 17) du premier réseau (2).

2. Procédé selon la revendication 1, dans lequel on ajoute, à la signalisation des paquets de premier réseau (2), des mots de code représentant des signalisations du second réseau (6).

3. Procédé selon l'une des revendications 1 et 2, dans lequel on réutilise, pour transporter les signalisations (19) des paquets du second réseau (6) dans ceux du premier réseau (2), des mots de code de ce dernier sans utilité pour des liaisons entre deux tels réseaux (2, 6).

4. Procédé selon l'une des revendications 1 à 3, dans lequel on transmet les données entre un premier réseau GSM (2) et un second réseau INTERNET (6), en logeant des adresses INTERNET dans le champ de signalisation de paquets SMS.

5. Procédé selon l'une des revendications 1 à 4, dans lequel, au niveau de la passerelle (4), on extrait, des paquets provenant du premier réseau (2), les deux champs de paquet du second réseau (18, 19) avant de les émettre, dans le second réseau (6), sous la forme d'un paquet (20) du second réseau (6).

## Claims

1. Method of transmitting data between a first piece of data transmission equipment (1) connected to a first packet data transmission network (2), of the cellular telephony type, and a second piece of transmission equipment (7) connected to a second packet data transmission network (6), of the INTERNET type, each packet of both networks (2, 6) comprising a useful data field (16, 18) and a signal field (17, 19), said method being **characterised in that**, the two networks (2, 6) being connected by a gateway (3, 4, 5) for adapting the data and controlling the routing in the two networks (2, 6), the two packet fields (18, 19) of the second network (6) are transported through the first network (2) respectively into the two homologous packet fields (16, 17) of the first network (2).

2. Method according to claim 1, wherein code words representing the signals of the second network (6) are added to the signals of the packets of the first network (2).

3. Method according to one of claims 1 and 2, wherein, for transporting the signals (19) of the packets of the second network (6) into those of the first network (2), code words of the latter are used which are of no use for links between two such networks (2, 6).

4. Method according to one of claims 1 to 3, wherein the data are transmitted between a first GSM network (2) and a second INTERNET network (6) by putting INTERNET addresses into the signal field of SMS packets.

5. Method according to one of claims 1 to 4, wherein, at the gateway (4) level, the two packet fields of the second network (18, 19) are extracted from the packets coming from the first network (2) before being transmitted, in the second network (6), in the form of a packet (20) of the second network (6).

## Patentansprüche

1. Datenübertragungsverfahren zwischen einer ersten Datenübertragungseinrichtung (1), die an ein erstes Paketübertragungsnetz (2) von der Art des Mobilfunknetz angeschlossen ist, und einer zweiten Übertragungseinrichtung (7), die an ein zweites Paketdatenübertragungsnetz (6) von der Art INTERNET angeschlossen ist, wobei jedes Paket des einen und anderen der Netze (2, 6) einen Nutzdatenbereich (16, 18) und einen Zeichengabebereich (17, 19) umfasst, wobei das Verfahren **dadurch gekennzeichnet ist, dass**, wobei die beiden Netze (2, 6) durch eine Netzwerkbrücke (3, 4, 5) zur Anpassung der Daten und Leitwegsteuerung in den beiden Netzen (2, 6) verbunden sind, über das erste Netz (2) die beiden Paketbereiche (18, 19) des zweiten Netzes (6) jeweils in zwei homologen Paketbereichen (16, 17) des ersten Netzes (2) transportiert werden.

2. Verfahren nach Anspruch 1, wobei zur Zeichengabe der Pakete des ersten Netzes (2) Codewörter hinzugefügt werden, die Zeichengaben des zweiten Netzes (6) darstellen.

3. Verfahren nach einem der Ansprüche 1 und 2, wobei zum Transport der Zeichengaben (19) der Pakete des zweiten Netzes (6) in denjenigen des ersten Netzes (2) Codewörter des Letztgenannten wiederverwendet werden, die für die Verbindungen zwischen zweien solcher Netze (2, 6) nicht von Nutzen sind.

4. Verfahren nach einem der Ansprüche 1 bis 3, wobei die Daten zwischen einem ersten Netz, dem GSM-Netz (2) und einem zweiten Netz, dem INTERNET (6) übertragen werden, indem INTERNET-Adressen im Signalgabebereich von SMS-Paketen hinterlegt werden.

5. Verfahren nach einem der Ansprüche 1 bis 4, wobei auf der Ebene der Netzwerkbrücke (4) aus den aus dem ersten Netz (2) stammenden Paketen die beiden Paketbereiche des zweiten Netzes (18, 19) extrahiert werden, bevor sie im zweiten Netz (6) in Form eines Pakets (20) des zweiten Netzes (6) verschickt werden.
